# EUROPEAN PATENT SPECIFICATION

(11) **EP 3 432 443 B1**
(45) Date of publication and mention of the grant of the patent: **10.09.2025**
(21) Application number: 17182363.6
(22) Date of filing: 20.07.2017
(51) Int. Cl.: H02J 50/40, H02J 50/80, B64C 13/50

(54) **WIRELESS POWER SYSTEM**
DRAHTLOSES STROMSYSTEM
SYSTÈME D'ALIMENTATION SANS FIL

(43) Date of publication of application: 23.01.2019
(73) Proprietor: Goodrich Actuation Systems Limited, Solihull, West Midlands B90 4SS (GB)
(72) Inventor: Popek, Grzegorz, Birmingham, B14 5QH (GB); Gietzold, Thomas, Stratford upon Avon, CV37 0BQ (GB)
(74) Representative: Dehns

(56) References cited:
- WO-A1-97/42695
- US-A1- 2010 314 937
- US-A1- 2015 188 358
- KAAN BUR ET AL: "Wireless sensor and actuator networks: Enabling the nervous system of the active aircraft", IEEE COMMUNICATIONS MAGAZINE, IEEE SERVICE CENTER, PISCATAWAY, US, vol. 48, no. 7, 1 July 2010 (2010-07-01), pages 118 - 125, XP011312233, ISSN: 0163-6804

## Description

### TECHNICAL FIELD

The present disclosure relates generally to electronic power systems such as systems for providing power signals for controlling motor drive or actuator electronics in an aircraft.

### BACKGROUND

There are various different components within an aircraft that may be electrically driven, including actuatable elements such as variable area fan nozzles and aircraft control surfaces as well as the motor itself. These components may typically have different power requirements such that a single output power source may generally be unsuitable. Aircraft electronic power systems may thus be required to generate various voltages of different power levels and frequencies to be applied to the various different components.

Various power systems that may be directly driven from either DC or AC sources have been proposed, with various different topologies, including multilevel or resonant inverters. However, existing approaches suffer from various problems that may render them impractical, or undesirable, especially for use in an aircraft. US 2015/0188358 relates to a non-contact power supply apparatus. WO 97/42695 relates to an inductively powered battery charger. US 2010/0314937 relates to a reconfigurable multi-cell power converter. The article "Wireless sensor and actuator networks: enabling the nervous system of the active aircraft", by B Kaan et al., XP011312233, describes a wireless sensor and actuator network within an aircraft.

### SUMMARY

The present invention provides an electronic power system as claimed in claim 1.

Thus, the system comprises a central power controller that is configured to wirelessly communicate with a plurality of individual power cells. The power controller may thus transmit various command signals and/or power signals (i.e. energy) towards the power cells and in response to receiving one or more such signals from the power controller, the power cells provide a respective power output.

For example, the power controller may be arranged to transfer energy wirelessly to the power cells such that the respective power output of a power cell is generated from signals received from the power controller via wireless energy transfer. Thus, the power controller may be arranged to (e.g. selectively) wirelessly transmit energy to one or more of the power cells, which may in turn provide their respective power output(s). That is, the signals (or "power signals") may transmit energy from the power controller to the power cells. In this case, the power outputs of the power cells are generated from the power i.e. energy transmitted from the power controller via wireless energy transfer.

However, it is also contemplated that the power cells may store or generate (at least some) energy locally, or receive energy (e.g. wirelessly) from a further source, which energy may then be released in response to receiving an appropriate signal from the power controller. In this case, the signals transmitted by the power controller may cause or command the power cells to release or generate such energy in order to provide their respective power output. Thus, it is contemplated that the signals transmitted by the power controller comprise command signals which may be transmitted independently of any wireless power transfer between the power controller and the power cells. Thus, according to some examples, each power cell may comprise one or more energy storage devices, and the one or more energy storage devices may be discharged in response to receiving a signal from the power controller. Optionally, the one or more energy storage devices may be wirelessly charged using signals transmitted by the power controller.

Each power cell has an adjustable power output. The respective power outputs of the plurality of power cells is thus adjusted based on signals received from the power controller. Thus, a power cell may provide a selected or commanded power output in response to receiving a control (or "command") signal from the (or a) power controller. Thus, the power controller may be arranged to transmit command signals to cause the power cells to provide their respective power output. Particularly, each power cell may have an adjustable voltage and/or adjustable current output. For example, the command signals may command a power cell to adjust the level and/or polarity of its respective voltage output. As another example, the command signals may command a power cell to adjust the amount and/or direction of its respective current output. The power cell may thus be controlled by the command signals to act as a switch. For instance, the power cells may be commanded to pass currents in a unidirectional or bidirectional manner.

The plurality of power cells are each individually addressable by the power controller. Thus, the power controller may be capable of selectively transmitting signals to each, or any, of the power cells in order to cause the selected cells to provide a power output.

The output(s) of the electronic power system may generally be obtained from a combination of the respective power outputs of at least some of (or all of) the plurality of power cells. Particularly, the output(s) of the electronic power system may be obtained from a combination of the respective power outputs from two or more of the plurality of power cells.

The respective power outputs may be combined in various different ways in order to provide the output(s) of the electronic power system. For example, at least some of the plurality of power cells may be arranged with their respective power outputs connected in series. In this way, the respective voltage outputs of the power cells that are connected in series may be added together to increase the total voltage output. As another example, at least some of the plurality of power cells may be arranged with their respective power outputs connected in parallel. In this way, the respective current outputs of the power cells that are connected in parallel may be added together to increase the total current output. Furthermore, the plurality of cells may be arranged so that at least some of the cells are arranged with their respective power outputs connected in series and at least some other of the cells arranged with their respective power outputs connected in parallel. For instance, the plurality of cells may be arranged into a number of parallel branches, with each branch comprising a plurality of cells connected in series. Various other arrangements are contemplated.

The plurality of power cells may be configurable into different physical and/or electrical arrangements in order to change the output of the electronic power system. For example, the plurality of power cells may be physically rearranged relative to one another in order to change the output of the electronic power system. Alternatively, the manner in which the respective power outputs of the plurality of power cells are combined may be re-configured electrically or electronically in order to change the output of the electronic power system.

The or each power cell may further comprise an AC-to-DC converter (or rectifier) for converting the output from the wireless receiver device. The AC-to-DC converter may thus generally be located downstream of the wireless receiver device, between the wireless receiver device and the respective power output of the power cell. The or each power cell may further comprise one or more DC-to-DC converters located downstream of the AC-to-DC converter. The DC-to-DC converters may thus convert (e.g. step up) the output from the AC-to-DC converter in order to ultimately provide the respective power output of the power cell.

The or each power cell may be provided with a transmitting device for communicating with a corresponding receiving device of the power controller. For example, the wireless receiver device of the power cells may comprise a transceiver. Similarly, the wireless transmitter device of the power controller may also comprise a transceiver, or a wireless receiver device may be provided with the power controller, in order to receive signals from the power cell(s). In this way, the power cells may transmit feedback and/or status information back to the power controller.

The present invention also provides an actuator system as claimed in claim 9.

The present invention also provides a motor drive system, such as a variable speed drive system, as claimed in claim 10.

The present invention also provides an aircraft as claimed in claim 11.

### BRIEF DESCRIPTION OF THE DRAWINGS

Various arrangements and embodiments will now be described, by way of example only, and with reference to the accompanying drawings, in which:
Fig. 1 illustrates the concept of a wireless power system according to an example of the present disclosure;
Fig. 2 shows schematically an example of a power cell that may be used within a system like that shown in Fig. 1;
Fig. 3 shows how the individual outputs of power cells may be connected in series to provide higher voltage outputs;
Fig. 4 shows how the individual outputs of power cells may be connected in parallel to provide higher current outputs;
Fig. 5 shows an example of an actuator system including a wireless power system; and
Fig. 6 shows an example of a motor drive system including a wireless power system.

### DETAILED DESCRIPTION

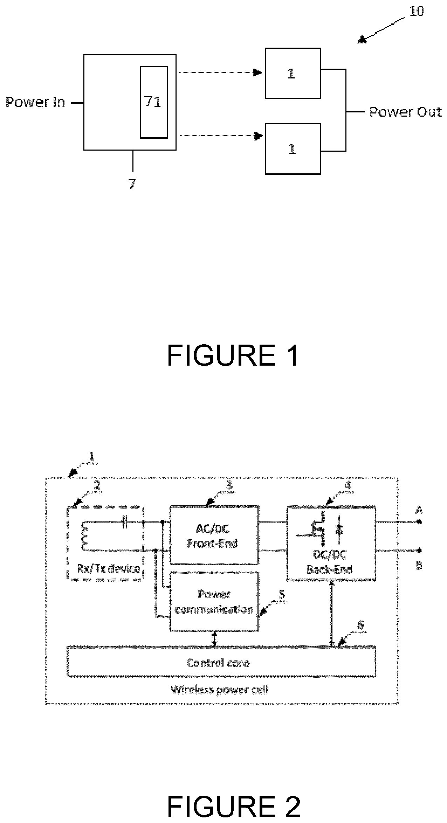

Fig. 1 illustrates schematically the concept of a wireless electronic power system 10 according to an example of the present disclosure. As shown, the system 10 generally comprises a central power controller 7 that is configured for wireless communication with a plurality of individual power cells 1. Particularly, the power controller 7 comprises one or more transmitter devices 71 for generating and wirelessly transmitting various signals and/or power towards the power cells 1. The power cells 1 thus comprise corresponding wireless receiver devices for receiving the transmitted signals and/or collecting the delivered power.

The power controller 7 may transmit various types of signal to the power cells 1. For example, the signals transmitted from the power controller 7 may comprise command signals wherein upon receipt of an appropriate command signal from the power controller 7, a power cell 1 may be caused to put out a respective power output. Thus, the command signals may cause the power cells 1 to provide power at a communicated (i.e. commanded) level upon request from the power controller 7. That is, the transmitted command signals may command the power cell 1 to provide a selected power output.

The power controller 7 is generally configured to wirelessly transfer power to the individual power cells 1. Thus, the signals transmitted from the power controller 7 may (also) comprise power signals for transferring energy to the individual power cells 1. The power outputs of the power cells 1 may therefore be generated via a wireless power transfer protocol from or using the energy transferred from the power controller 7 in the transmitted signals. A power cell 1 may be arranged to output power whenever the power controller 7 is transmitting energy (i.e. power signals) to that power cell 1. The respective power output may optionally be further controlled using command signals transmitted by the power controller 7, as explained above.

However, it is also contemplated that the power cells 1 may comprise various charge storage devices which may be discharged in order to generate or supplement the respective power output of the power cell 1 upon receipt of a signal (e.g. a command signal) from the power controller 7. Where the power cells 1 comprise such charge storage devices (e.g. one or more capacitors or batteries), the charge storage devices may optionally be wirelessly charged, either substantially continuously or periodically, using signals transmitted from the power controller 7, or by using a separate wireless charging device (not shown). In this case, the energy that is stored or generated locally at the power cells 1 may be released upon receipt of an appropriate command signal from the power controller 7.

The wirelessly transmitted signals used in accordance with the present disclosure typically comprise electromagnetic signals. For example, the wirelessly transmitted signals may comprise high frequency or radio frequency (RF) signals, as are generally known for use in wireless communication and energy transfer applications.

The respective power outputs provided by each (or at least some) of the individual power cells 1 are combined with others of the power cell 1 outputs in order to give a total power output of the wireless power system 10. The power output of the system 10 may then be provided to a further component such as an actuator or a motor. Also, different power cells 1, or combinations of power cells 1, may be used to generate a plurality of different power outputs which may be provided simultaneously to different loads.

Although for simplicity Fig. 1 shows just two wireless power cells 1 in communication with a single power controller 7, it will be appreciated that a wireless power system 10 according to the present disclosure may generally comprise any number of wireless power cells 1 and further that the various wireless power cells 1 may be arranged in various different configurations (so as to give various combinations of their power outputs). For example, without limitation, the system 10 may comprise 2, 4, 6, 10, 50, 100 or more individual power cells 1.

By controlling which of the power cells 1 provide a power output, the level of the respective power outputs of the power cells 1, and how the respective generated power outputs are combined, it will be appreciated that the wireless power system 10 may be arranged to generate a wide range of different power outputs. The wireless power systems 10 presented herein may thus be highly flexible and capable of outputting power at various different levels depending on the application. This flexibility may be achieved by the 'modular' structure of the system 10 provided by the plurality of power cells 1 which may each be selectively configured in order to generate a wide range of different combined power outputs. For example, by arranging for the power controller 7 to only transmit power signals to a selected number of power cells 1, or by providing different physical arrangements of power cells 1 so that the individual power outputs are combined in different manners, the combined power output of the wireless power system 10 may be controlled in a highly flexible manner. Thus, the power output can be varied widely (at least up to a maximum output). The output of the system 10 thus need not be limited to one or more discrete power levels generated by the power source (e.g. 115 or 230 V). This degree of flexibility may in turn open up new design possibilities for the components that are being driven by the power system 10.

Because a plurality of power cells 1 may be controlled wirelessly using a single power controller 7, the system may also provide a high level of redundancy at the output side. Thus, even if one or more of the power cells 1 fails, the system 10 may still be operable to generate power using the remaining of the power cells 1. By providing this redundancy, the reliability of the system 10 may be improved, which may help to ensure that there is no complete loss of functionality during use (which may be particularly important in the context of power systems for an aircraft). Thus, each of the plurality of power cells 1 may be substantially self-contained in terms of supply power and communicating with the power controller 7.

Furthermore, the use of wireless communication and power transfer between the power controller 7 and the power cells 1 may allow the power input to be effectively isolated or decoupled from the output (or load), both electrically and mechanically, which may help to reduce electrical interference or noise and also reduce the effect of vibrations. The use of wireless communication may also reduce the number of physical electrical connectors required to construct the system, as, at least in some examples, essentially only a single physical electrical connector may be required for each power controller 7 for connecting each power controller 7 to a power input. The power cells 1 need not therefore be physically electrically connected to the power controller 7, or ultimately to a power source, as power may be selectively wirelessly transmitted to the power cells 1 via the power controller 7. Thus, the number of sockets and plugs required for the system 10 may be substantially reduced or minimised. Sockets and plugs generally represent a source of relatively high cost and bulk and low reliability in electronic power systems and reducing the number of such connectors may therefore be particularly desirable for aircraft power systems, and especially for motor drive systems.

Furthermore, by dividing the total load of the system 10 between a plurality of power cells 1, each power cell 1 may only need to provide a relatively maximum low voltage. For example, each power cell 1 may be configured to generate power outputs within the range 0 to 60 V, or even 0 to 50 V. However, by suitably combining the power outputs from multiple such power cells 1 it is possible for the system 10 to generate higher power outputs as required. By using a plurality of relatively smaller or lower load power cells 1 to generate the desired power output, each of the individual power cells 1 may have a relatively lower cost and compact or lightweight construction. For instance, the power cells 1 may be constructed utilising commercially available components utilised from existing wireless power transfer systems for use with consumer electronic devices. For instance, the complete power cells 1 may be constructed on a chip and/or from solid-state components.

As shown in Fig. 1, the power system 10 may comprise a single dedicated power controller 7 for communicating with a plurality of power cells 1. However, power systems 10 are also contemplated having a plurality of power controllers 7, which may provide additional redundancy in the system at the input side. In that case, each of the plurality of power controllers 7 may communicate, or be capable of communicating with, each and every power cell 1 within the system. However, it is also contemplated that each of the plurality of power controllers 7 may communicate only with a selected subset of power cells 1, so that the system 10 effectively includes a plurality of individual channels, each channel comprising a dedicated power controller 7 and a corresponding plurality of power cells 1.

According to some examples, the power controller 7 may be configured to control the total power output of the system 10 (at least in part) by selectively transmitting signals only to a subset of the plurality of power cells 1, wherein only power cells 1 that receive a signal are caused to provide a power output. Each of the power cells 1 may thus be individually addressed by the power controller 7. For instance, the power controller 7 may generate and transmit signals to the respective wireless power cells 1 using different carrier frequencies. Alternatively, or additionally, the transmitted signals may each comprise an address header for identifying particular power cell(s) 1. Upon receipt of a transmitted signal, the power cells 1 may thus process or extract the address header in order to determine whether or not they are being addressed, and whether or not a power output should be generated. In the latter case it will be appreciated that a plurality of transmitted signals may be transmitted at the same carrier frequency. For example, an 8-bit address header would potentially allow up to 256 (= 2⁸) power cells 1 to be individually addressed. The power cells 1 may each be arranged to listen for signals at their specific carrier frequency, or containing their specific address header, and to then (only) output power when they are addressed.

Generally, as mentioned above, the signals transmitted by the power controller 7 may also comprise command signals for controlling or determining the level of output of the power cells 1. That is, the signals may also comprise commands from the power controller 7 which may be received and processed by the power cells 1 in order to cause the power cells 1 to output a commanded power output e.g. a commanded voltage output and/or current output. For example, the signals may comprise commands for adjusting or setting the respective power outputs of the power cells 1 to a selected level e.g. up to a maximum power output of the power cell 1. By appropriately setting the respective power outputs of a plurality of selected power cells 1, the total output of the system 10 may thus be controlled or programmed using signals transmitted by the power controller 7.

The same signals may be used for addressing and commanding the power cells 1 as well as for transferring energy. That is, both the power signals and command signals described above may be transmitted together as a single signal. However, it is also contemplated that separate signals may be sent from the power controller 7 for addressing and/or commanding the power cells 1 and for transferring energy to the power cells 1. Furthermore, it is contemplated that the power controller 7 may comprise separate transmitter devices for sending the command signals and for transferring energy to the power cells 1. Similarly, the power cells 1 may comprise a plurality of receiver devices for receiving a corresponding plurality of signals from the power controller 7. For example, the power controller 7 may first send addressing and/or command signals to prepare the power cells 1, and then subsequently transfer energy to the power cells 1.

It will be appreciated that the principles of wireless communication and wireless energy transfer are generally well established, especially in the field of consumer electronic devices. Thus, it is contemplated that various wireless communication protocols may suitably be used for the transmission of the signals between the power controller 7 and the power cells 1. Similarly, various suitable wireless transmitters and/or receivers may be utilised within the power controller(s) 7 and the power cells 1 in order to provide the required transmission of the signals between the power controller 7 to the power cells 1. Typically, the signals may comprise electromagnetic signals, although it will be appreciated that various other wireless communication protocols might be used. Typically, for wireless power transfer, relatively higher frequency electromagnetic signals, e.g. of frequencies above about 100 kHz, and up to tens of MHz, may be used to energise the power cells 1.

For example, wireless signals may be transmitted using various known standard wireless communication protocols such as Bluetooth^{®}, Wi-Fi or ZigBee. Further examples of suitable wireless power transmission systems are described in US Patent No. 9,143,000 (ENERGOUS CORPORATION) and US Patent No. 8,410,953 (OMNIELECTRIC, INC.). Some other suitable wireless power transmission systems may be those described, for example, in US 2016/0268843 (ACCESS BUSINESS GROUP INTERNATIONAL, LLC), US 2015/0340910 (ENERGOUS CORPORATION) and US 2017/0070101 (SAMSUNG ELECTRONICS CO., LTD). By contrast to these known approaches for wireless energy transfer, at least in some examples of the present disclosure, the wireless transfer is not used for charging or for providing primary power of an electronic device such as a cellular phone, but is rather used to generate and control an electrical power output of a power cell 1, and optionally of a plurality of power cells in combination, in order to provide an output that may be provided to a load as a control or power voltage.

Fig. 2 shows schematically an example of a power cell 1 that may be used within a system like that shown in Fig. 1. Each power cell 1 generally comprises a wireless receiver device 2 such as an RF antenna for receiving the power signals transmitted by the power controller 7. The wireless receiver device 2 may comprise a transceiver to allow for two-way communication between the power cells 1 and the power controller 7. For instance, the power cells 1 may also communicate feedback to the power controller 7 and a bidirectional communication link may be established between processing units of the power cells 1 and the power controller 7. For example, by providing feedback information to the power controller 7, e.g. reporting a status or reporting a failure of one of the power cells 1, the power controller 7 may be able to adjust the transmitted signals in order to adjust the respective power output(s) of the power cells to sustain or change the power output of the system 10. Alternatively, a separate transmitter device (not shown) may be provided within the power cell 1 for communication with the power controller 7. The power controller 7 may generally comprise corresponding receiver(s) for receiving the signals transmitted from the power cells 1. For instance, the transmitter device 71 of the power controller 7 may comprise a transceiver or a separate receiver device may be provided associated with the power controller 7. The wireless receiver device 2 may comprise a solid-state receiver device. The power cell 1 may be built entirely on a chip as an integrated circuit.

Each power cell 1 may also generally comprise a 'front-end' rectifier or AC-to-DC converter 3 for converting the received power signals into a first DC output. Optionally, as shown in Fig. 2, the power cell 1 may further comprise a 'back-end' DC-to-DC converter 4 for stepping up or transforming the first DC output from the AC-to-DC converter 3 into a final power output of the power cell 1 provided between output terminals A, B.

The power output of each respective power cell 1 is typically adjustable and may be controlled using the signals sent by the power controller 7. For instance, as shown in Fig. 2, the power cells 1 comprise one or more processing or control units such as a processing unit in the form of a control core 6, wherein the signals received by the receiver device 2 may be passed to the control core 6 optionally via a power communication module 5 and used to determine or control the power output of the power cell 1. For example, the control core 6 may be used to adjust or control the output of the AC-to-DC converter 3 and/or the DC-to-DC converter 4 (as shown in Fig. 2) in order to control the power output of the power cell 1. Thus, as mentioned above, the power controller 7 may transmit signals containing voltage and/or current commands which may be processed by the power cells 1 in order to generate a power output having the commanded voltage (e.g. magnitude and polarity) and/or current. Each of the power cells 1 may thus be capable of generating a programmable or communicable power output as determined by the power controller 7.

Optionally, the power cells 1 may further comprise batteries or energy storage devices such as capacitors or inductors (not shown) for providing additional power to supplement the power that may be generated from the power signals. It is also contemplated that the power cells may generate or store at least some energy locally in such components (i.e. independently of any wireless power transfer from the power controller 7). The discharge of these components may thus be triggered by the received power signals. However, typically, the power output of the power cells 1 may be obtained primarily (or exclusively) from the power signals received from the power controller 7. That is, typically the power output of the power cells 1 is obtained by wireless energy transfer from the power controller 7.

It will be appreciated that the respective power outputs of the individual power cells 1 may be combined in various different ways to change the power output of the wireless power system. Thus, the power cells 1 effectively constitute a number of modules, or 'building blocks', from which the power system may be constructed. Because each of the power cells 1 may be individually controlled by a central power controller 7, and because the power cells 1 may be arranged in various ways to give different combinations of their respective outputs, it will be appreciated that the wireless power systems 10 presented herein may be highly flexible and capable of generating a wide range of different power outputs (e.g. having a wide range of different voltages) as required depending on the application.

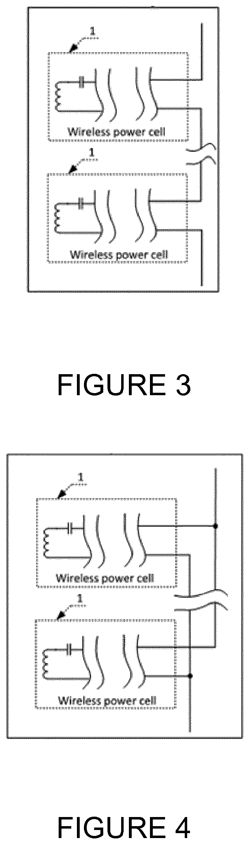

For instance, Fig. 3 shows schematically an example of an output circuit wherein a plurality of wireless power cells 1 of the type described above are arranged with their outputs connected in series so as to provide output voltages that exceed the voltage output of the individual power cells 1.

On the other hand, Fig. 4 shows schematically an example of another output circuit wherein a plurality of wireless power cells 1 of the type described above are arranged with their outputs connected in parallel so as to provide output currents that exceed the current output of the individual power cells 1.

Thus, it will be appreciated that depending on the application, and the desired power output, the power cells 1 may be arranged in various different physical configurations. For example, a plurality of power cells 1 may be arranged and configured to provide a multilevel inverter system. As another example, a power cell 1 may be effectively switched ON/OFF to emulate a uni- or bi-directional switch. The plurality of power cells 1 may thus be arranged to pass currents in various directions. Thus, the plurality of power cells 1 may be used to implement a "H-bridge"-type configuration. Furthermore, it will be appreciated that the power cells 1 may be used to define multiple H-bridges which may be selectively operated or shorter with one another. As a further example, a plurality of power cells 1 may be arranged into a "totem pole" configuration. In general, it will be appreciated that by suitable reconfiguration of the plurality of power cells 1 practically any desired power output may be generated.

According to some examples of the present disclosure, the power system 10, and particularly the plurality of power cells 1, may be mounted and arranged within a fixed array. For example, a rack or other suitable mounting structure may be provided for fixing the power cells 1 into such an array. This may help to reduce the effects of vibrations within the system. Indeed, it will be appreciated that in general the power cells 1 may be fixed in position, so that there is relatively low (or essentially zero) movement between the power cells 1. Because the power cells 1 may be fixed in position relative to the power controller 7 there is relatively little chance of misalignment so that the transmission of the wireless signals may be substantially optimised or enhanced. For instance, various electromagnetic focussing elements (e.g. magnetic materials or metal sheets) or shielding elements may be provided to facilitate the guiding of the wireless signal towards the desired power cells 1 for additional reliability and/or efficiency.

The configuration of the electrical connections between the power outputs of the power cells 1 may be changed physically, e.g. by re-positioning the power cells 1 relative to each other within an array. However, it is also contemplated that the electrical connections between the power outputs of the power cells 1 may be changed or re-configured in use. For example, by providing a suitably reconfigurable output circuit arrangement e.g. incorporating appropriate switches, it may be possible to electrically or electronically re-configure these connections in order to vary how the outputs are combined. It is contemplated that control signals for electronically re-configuring the output circuit may generally be provided by the power controller 7.

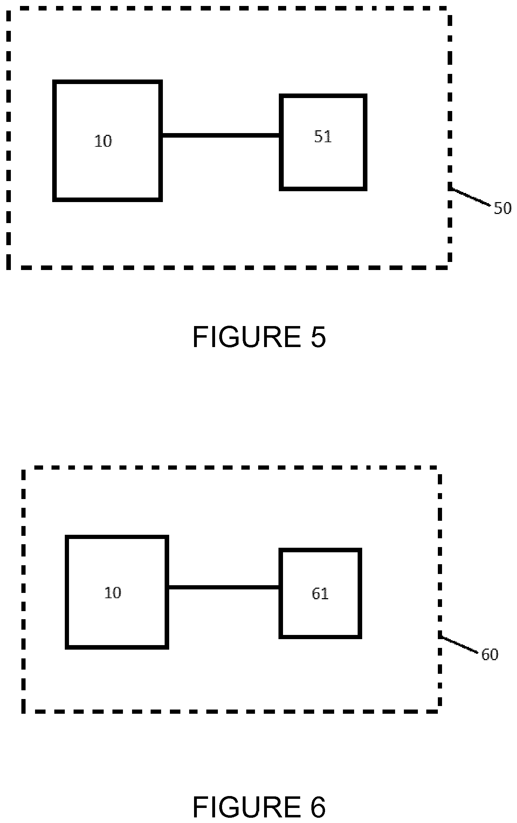

In general, the electronic power systems presented herein may suitably be used for controlling various elements. For example, Fig. 5 illustrates an actuator system 50 comprising an electronic power system 10 substantially of the type described hereinabove and an actuatable element 51. The actuatable element 51 may e.g. comprise a linear actuator such as an actuator for a variable area fan nozzle or the like, or a propeller actuator. The output of the power system 10 may thus be provided to the actuatable element 51 to cause the actuatable element 51 to move. As another example, as shown in Fig. 6, an electronic power system 10 substantially of the type described hereinabove may be used within a motor drive system 60 wherein the output of the power system 10 is used to drive a motor 61. The electronic power system 10 may e.g. be used to drive a variable speed drive system. It will be appreciated that because the output of the electronic power system 10 may be widely varied, the form of the motor 61 may be relatively unrestricted. For instance, the motor 61 need not operate at standard operating voltages (e.g. of 115 or 230 V) but may be designed to operate at various other suitable voltages. Thus, the flexibility afforded by the electronic power system 10 may in turn extend the range of applications and possible designs for other components.

Thus, it will be appreciated that electronic power systems according to the present disclosure may provide a highly flexible and controllable power output, particularly suited for the aviation industry. Particularly, it will be appreciated that the power systems according to the present disclosure may provide various improvements compared to known systems which typically require relatively complicated floating gate drive circuits or balancing arrangements in order to provide multi-level power outputs.

Although the techniques presented herein have been described with reference to particular embodiments, it will be understood by those skilled in the art that various changes in form and detail may be made without departing from the scope of the invention as set forth in the accompanying claims.

## Claims

1. An electronic power system (10) for providing power signals for controlling an aircraft component, the system comprising:
a power controller (7) comprising a wireless transmitter device (71); and
a plurality of power cells (1), each power cell (1) comprising a wireless receiver device (2) for receiving wirelessly transmitted signals from said power controller (7), wherein each power cell (1) is configured to provide a respective power output using signals received from the power controller (7), wherein each power cell (1) has an adjustable power output;
wherein said plurality of power cells are individually addressable by said power controller (7);
wherein each power cell (1) comprises one or more processing or control units (5, 6) for processing signals received from the power controller (7) for controlling the respective power outputs; and
wherein the system is configured such that an overall output of the electronic power system (10) for controlling the aircraft component is obtained from the combined respective power outputs of at least some of said plurality of power cells (1), and wherein the power controller (7) is configured to adjust respective power outputs of said plurality of power cells (1) by means of signals in order to control the overall output of the electronic power system (10).

2. The electronic power system (10) of claim 1, wherein the power controller (7) is arranged to transfer energy wirelessly to the power cells (1) such that the respective power output of a power cell (1) is generated from the power transmitted in a power signal transmitted to the power cell (1) from the power controller (7) via wireless energy transfer.

3. The electronic power system (10) of any preceding claim, wherein at least some of said plurality of power cells (1) are arranged with their respective power outputs connected in series.

4. The electronic power system (10) of any preceding claim, wherein at least some of said plurality of power cells (1) are arranged with their respective power outputs connected in parallel.

5. The electronic power system (10) of any preceding claim, wherein said plurality of power cells (1) are configurable into different physical and/or electrical arrangements in order to change the output of the electronic power system (10).

6. The electronic power system (10) of any preceding claim, wherein each power cell (1) further comprises an AC-to-DC converter (3) for converting the output from said wireless receiver device (2).

7. The electronic power system (10) of claim 6, wherein each power cell (1) further comprises one or more DC-to-DC converters (4) located downstream of said AC-to-DC converter (3) for providing the respective power output of said power cell (1).

8. The electronic power system (10) of claim 6 or 7, wherein each power cell (1) comprises a transmitting device (2) for communicating wirelessly with said power controller (7) and/or wherein said wireless receiver device (2) comprises a transceiver.

9. An actuator system (50) comprising an actuatable element (51), such as a linear or propeller actuator, and an electronic power system (10) as claimed in any preceding claim, wherein the said actuator system is configured such that the output of said electronic power system (10) is provided to said actuatable element (51) to cause said actuatable element (51) to move.

10. A motor drive system (60), such as a variable speed drive system, comprising a motor (61) and an electronic power system (10) as claimed in any of claims 1-8, wherein said motor drive system (60) is configured such that the output of said electronic power system (10) is used to drive said motor (61).

11. An aircraft comprising an actuator system (50) as claimed in claim 9 and/or a motor drive system (60) as claimed in claim 10.

## Patentansprüche

1. Ein elektronisches Stromsystem (10) zum Bereitstellen von Stromsignalen zum Steuern einer Luftfahrzeugkomponente, wobei das System Folgendes umfasst:
eine Stromsteuerung (7), umfassend eine drahtlose Sendevorrichtung (71); und
eine Vielzahl von Stromzellen (1), wobei jede Stromzelle (1) eine drahtlose Empfangsvorrichtung (2) zum Empfangen drahtlos übertragener Signale von der Stromsteuerung (7) umfasst, wobei jede Stromzelle (1) so eingerichtet ist, dass sie mithilfe von Signalen, die von der Stromsteuerung (7) empfangen werden, eine jeweilige Stromabgabe bereitstellt, wobei jede Stromzelle (1) eine einstellbare Stromabgabe aufweist;
wobei die Vielzahl von Stromzellen einzeln durch die Stromsteuerung (7) adressierbar sind;
wobei jede Stromzelle (1) eine oder mehrere Verarbeitungs- oder Steuereinheiten (5, 6) zur Verarbeitung von Signalen umfasst, die von der Stromsteuerung (7) zum Steuern der jeweiligen Stromabgabe empfangen werden; und
wobei das System eingerichtet ist, so dass eine Gesamtabgabe des elektronischen Stromsystems (10) zum Steuern der Luftfahrzeugkomponente aus den kombinierten jeweiligen Stromabgaben mindestens einiger der Vielzahl von Stromzellen (1) gewonnen wird, und wobei die Stromsteuerung (7) so eingerichtet ist, dass sie die jeweiligen Stromabgaben der Vielzahl von Stromzellen (1) mittels Signalen anpasst, um die Gesamtleistung des elektronischen Stromsystems (10) zu steuern.

2. Elektronisches Stromsystem (10) nach Anspruch 1, wobei die Stromsteuerung (7) so angeordnet ist, dass sie Energie drahtlos an die Stromzellen (1) überträgt, sodass die jeweilige Stromabgabe einer Stromzelle (1) aus dem in einem von der Stromsteuerung (7) per drahtloser Energieübertragung an die Stromzelle (1) übertragenen Strom erzeugt wird.

3. Elektronisches Stromsystem (10) nach einem der vorhergehenden Ansprüche, wobei mindestens einige der Vielzahl von Stromzellen (1) mit ihren jeweiligen in Reihe geschalteten Stromabgaben angeordnet sind.

4. Elektronisches Stromsystem (10) nach einem der vorhergehenden Ansprüche, wobei mindestens einige der Vielzahl von Stromzellen (1) mit ihren jeweiligen parallel geschalteten Stromabgaben angeordnet sind.

5. Elektronisches Stromsystem (10) nach einem der vorhergehenden Ansprüche, wobei die Vielzahl von Stromzellen (1) in verschiedene physikalische und/oder elektrische Anordnungen einrichtbar sind, um die Abgabe des elektronischen Stromsystems (10) zu ändern.

6. Elektronisches Stromsystem (10) nach einem der vorhergehenden Ansprüche, wobei jede Stromzelle (1) ferner einen AC-DC-Wandler (3) zur Umwandlung der Abgabe von der drahtlosen Empfangsvorrichtung (2) umfasst.

7. Elektronisches Stromsystem (10) nach Anspruch 6, wobei jede Stromzelle (1) ferner einen oder mehrere DC-DC-Wandler (4) umfasst, die sich nach dem AC-DC-Wandler (3) befinden, um die jeweilige Stromabgabe der Stromzelle (1) bereitzustellen.

8. Elektronisches Stromsystem (10) nach Anspruch 6 oder 7, wobei jede Stromzelle (1) eine Sendevorrichtung (2) zur drahtlosen Kommunikation mit der Stromsteuerung (7) umfasst und/oder wobei die drahtlose Empfangsvorrichtung (2) einen Transceiver umfasst.

9. Betätigungssystem (50), umfassend ein betätigbares Element (51), wie einen Linear- oder Propellerbetätiger, und ein elektronisches Stromsystem (10) nach einem der vorhergehenden Ansprüche, wobei das Betätigungssystem eingerichtet ist, sodass
die Ausgabe des elektronischen Stromsystems (10) dem Betätigungselement (51) bereitgestellt wird, um das Betätigungselement (51) zu bewegen.

10. Motorantriebssystem (60), wie ein Antriebssystem mit variabler Drehzahl, umfassend einen Motor (61) und ein elektronisches Stromsystem (10) nach einem der Ansprüche 1 bis 8, wobei das Motorantriebssystem (60) eingerichtet ist, sodass
die Ausgabe des elektronischen Stromsystems (10) zum Antrieb des Motors (61) verwendet wird.

11. Luftfahrzeug, umfassend ein Antriebssystem (50) nach Anspruch 9 und/oder ein Motorantriebssystem (60) nach Anspruch 10.

## Revendications

1. Système (10) de puissance électronique pour fournir des signaux d'alimentation pour commander un composant d'aéronef, le système comprenant :
un régulateur de puissance (7) comprenant un dispositif émetteur sans fil (71) ; et
une pluralité de cellules de puissance (1), chaque cellule de puissance (1) comprenant un dispositif (2) récepteur sans fil pour recevoir des signaux transmis sans fil à partir dudit régulateur de puissance (7), dans lequel chaque cellule de puissance (1) est configurée pour fournir une sortie de puissance respective à l'aide de signaux reçus du régulateur de puissance (7), dans lequel chaque cellule de puissance (1) présente une sortie de puissance réglable ;
dans lequel ladite pluralité de cellules de puissance sont adressables individuellement par ledit
régulateur de puissance (7) ;
dans lequel chaque cellule de puissance (1) comprend une ou plusieurs unités de traitement ou de commande (5, 6) pour traiter des signaux reçus du régulateur de puissance (7) pour contrôler les sorties de puissance respectives ; et
dans lequel le système est configuré de sorte qu'une sortie globale du système (10) de puissance électronique pour commander le composant d'aéronef soit obtenue à partir des sorties de puissance respectives combinées d'au moins une partie de ladite pluralité de cellules de puissance (1), et dans lequel le régulateur de puissance (7) est configuré pour régler des sorties de puissance respectives de ladite pluralité de cellules de puissance (1) au moyen de signaux afin de commander la sortie globale du système (10) de puissance électronique.

2. Système (10) de puissance électronique selon la revendication 1, dans lequel le régulateur de puissance (7) est agencé pour transférer de l'énergie sans fil aux cellules de puissance (1) de sorte que la sortie de puissance respective d'une cellule de puissance (1) soit générée à partir de la puissance transmise dans un signal de puissance transmis à la cellule de puissance (1) par le régulateur de puissance (7) par transfert d'énergie sans fil.

3. Système (10) de puissance électronique selon une quelconque revendication précédente, dans lequel au moins certaines de ladite pluralité de cellules de puissance (1) sont agencées avec leurs sorties de puissance respectives connectées en série.

4. Système (10) de puissance électronique selon une quelconque revendication précédente, dans lequel au moins certaines de ladite pluralité de cellules de puissance (1) sont agencées avec leurs sorties de puissance respectives connectées en parallèle.

5. Système (10) de puissance électronique selon une quelconque revendication précédente, dans lequel ladite pluralité de cellules de puissance (1) sont configurables en différents agencements physiques et/ou électriques afin de modifier la sortie du système (10) de puissance électronique.

6. Système (10) de puissance électronique selon une quelconque revendication précédente, dans lequel chaque cellule de puissance (1) comprend en outre un convertisseur CA-CC (3) pour convertir la sortie dudit dispositif (2) récepteur sans fil.

7. Système (10) de puissance électronique selon la revendication 6, dans lequel chaque cellule de puissance (1) comprend en outre un ou plusieurs convertisseurs CC-CC (4) situés en aval dudit convertisseur CA-CC (3) pour fournir la sortie de puissance respective de ladite cellule de puissance (1).

8. Système (10) de puissance électronique selon la revendication 6 ou la revendication 7, dans lequel chaque cellule de puissance (1) comprend un dispositif (2) d'émission pour communiquer sans fil avec ledit régulateur de puissance (7) et/ou dans lequel ledit dispositif (2) récepteur sans fil comprend un émetteur-récepteur.

9. Système d'actionneur (50) comprenant un élément actionnable (51), tel qu'un actionneur linéaire ou à hélice, et un système (10) de puissance électronique selon l'une quelconque des revendications précédentes, dans lequel ledit système d'actionneur est configuré de telle sorte que
la sortie dudit système (10) de puissance électronique soit fournie audit élément actionnable (51) pour amener ledit élément actionnable (51) à se déplacer.

10. Système d'entraînement de moteur (60), tel qu'un système d'entraînement à vitesse variable, comprenant un moteur (61) et un système (10) de puissance électronique selon l'une quelconque des revendications 1 à 8, dans lequel ledit système d'entraînement de moteur (60) est configuré de telle sorte que
la sortie dudit système (10) de puissance électronique soit utilisée pour entraîner ledit moteur (61).

11. Aéronef comprenant un système d'actionneur (50) selon la revendication 9 et/ou système d'entraînement de moteur (60) selon la revendication 10.
